# EUROPÄISCHE PATENTSCHRIFT

(11) **EP 3 161 945 B1**
(45) Veröffentlichungstag und Bekanntmachung des Hinweises auf die Patenterteilung: **04.03.2020**
(21) Anmeldenummer: 15726126.4
(22) Anmeldetag: 29.05.2015
(51) Int. Cl.: H02K 3/38, H02K 5/24, H02K 11/00

(54) **ELEKTRISCHE MASCHINE**
ELECTRIC MACHINE
MOTEUR ÉLECTRIQUE

(30) Priorität: 30.06.2014 DE 102014212577
(43) Veröffentlichungstag der Anmeldung: 03.05.2017
(73) Patentinhaber: ZF Friedrichshafen AG, 88046 Friedrichshafen (DE)
(72) Erfinder: ZIMMER, Manfred, 97475 Zeil (DE); VIERNEKES, Gerald, 97437 Hassfurt (DE); RAUCH, Matthias, 97447 Frankenwinheim (DE); LOHAUS, Norbert, 97421 Schweinfurt (DE); KLAMANN, Sandra, 97769 Bad Brückenau (DE)
(86) Internationale Anmeldenummer: PCT/EP2015/061936
(87) Internationale Veröffentlichungsnummer: WO 2016/000875

(56) Entgegenhaltungen:
- EP-A1- 1 727 261
- US-A- 4 233 535
- US-A1- 2002 130 570
- US-A1- 2012 098 363
- US-A1- 2014 152 128

## Beschreibung

Vorliegende Erfindung betrifft eine elektrische Maschine, insbesondere für ein Hybridmodul eines Hybridfahrzeugs oder für ein Elektrofahrzeug gemäß dem Oberbegriff von Anspruch 1.

Bei elektrischen Maschinen, die bei Hybridfahrzeuge mit elektrischem Antrieb und Verbrennungsmotor eingesetzt werden, besteht das Problem, dass sie Vibrationen, die insbesondere von dem Verbrennungsmotor eingetragen werden, ausgesetzt sind. Diese Vibrationen können zu einer Schädigung der Bauteile der elektrischen Maschine und insbesondere ihrer elektrischen Verbindungen führen.

Aus dem Stand der Technik, beispielsweise der US 2003/0024749 A1, ist eine elektrische Maschine bekannt, bei der zwischen Stator und einem die elektrische Maschine von einem Verbrennungsmotor trennenden Gehäuse eine Abschirmplatte angeordnet ist. Diese Abschirmplatte ist zum einen dazu ausgelegt, Schaltringe, die in einer Schaltringaufnahme angeordnet sind, axial zu befestigen, und zum anderen, eine Abschirmung für die elektrische Maschine bereitzustellen. Dabei kann die Abschirmplatte aus Kunststoff für eine elektrische Abschirmung oder aus einem Metall für eine magnetische Abschirmung hergestellt sein. Die von dem Verbrennungsmotor auf die elektrische Maschine eingetragenen Vibrationen sind in diesem Stand der Technik dadurch vermieden, dass die Schaltringaufnahme einstückig mit Wickelkörpern für die Statorspulen ausgebildet sind und die Schaltringe selbst über die Abschirmplatte axial gesichert sind.

Aus der US 2012/0098363 A1 ist ein Stator für eine elektrische Maschine mit Innenrotor bekannt, die in Hybridantrieben eingesetzt werden kann.

Nachteilig an dieser bekannten Abschirmplatte ist jedoch, dass diese Platte, eine Kühlung der am Stator angeordneten Statorspulen übermäßig beeinträchtigt. Kann Wärme jedoch nicht ausreichend aus dem Stator abgeführt werden, so hat dies nachteilige Auswirkungen auf die Lebensdauer und Effektivität der elektrischen Maschine. Zudem ist bei elektrischen Maschinen, bei denen die Schaltringaufnahme nicht einstückig mit den Wickelkörpern der Statorspulen verbunden ist, das Problem des Vibrationseintrags noch nicht gelöst.

Aufgabe vorliegender Erfindung ist es deshalb, eine elektrische Maschine mit einer Vibrationssicherung bereitzustellen, die eine ausreichende Kühlung der Statorspulen zulässt und auch mit einer Schaltringaufnahme ausgestattet sein kann, die nicht einstückig mit den Wickelkörpern der Statorspulen ausgebildet ist..

Diese Aufgabe wird durch eine elektrische Maschine gemäß Patentanspruch 1 gelöst.

Die Erfindung basiert auf der Idee, mindestens ein Versteifungselement vorzusehen, das sich zumindest teilweise radial entlang mindestens einer der Statorspulen erstreckt und in dem radialen Erstreckungsbereich mindestens eine Fensteröffnung vorzusehen. Dadurch wird eine Kühlfluidzirkulation durch die Statorspulen in Form von Luft oder auch eines eingebrachten Kühlfluids ermöglicht, was wiederum die Lebensdauer der elektrischen Maschine erhöht. Dabei ist das Versteifungselement axial neben dem Stator angeordnet.

Da sich erfindungsgemäß das axial außen an der Schaltringaufnahme angeordnete Versteifungselement bis radial über die Schaltringaufnahme hinweg erstreckt, kann die Schaltringaufnahme direkt über das Versteifungselement an dem Stator befestigt werden, wodurch eine durch Schwingung im Antriebsstrang hervorgerufene Belastung an der Schaltringaufnahme und an den Kontaktbereichen zwischen den Schaltringen und den Spulenenden vermieden werden kann. Eine integrale Ausbildung der Schaltringaufnahme mit den Isolierkörpern der Statorspulen ist somit nicht mehr nötig.

Um das Versteifungselement an dem Stator bzw. einem Element des Stators und/oder an der Schaltringaufnahme zu befestigen, können radial innen und/oder radial außen an dem Versteifungselement axiale und/oder radiale Fortsätze vorgesehen sein. Dabei erstreckt sich vorzugsweise der mindestens eine Fortsatz in Richtung Stator und/oder über den Schaltring hinweg. Diese axialen bzw. radialen Fortsätze sind insbesondere dazu geeignet, das Versteifungselement lösbar oder unlösbar an dem Schaltring bzw. einem Element des Stators, insbesondere an dem Statorträger oder einem einen Statorzahn von einer Statorspule isolierenden Isolierelement, zu befestigen.

Wie ein weiteres Ausführungsbeispiel zeigt, kann das Versteifungselement direkt an dem Statorträger lösbar oder unlösbar befestigt sein. Da das Versteifungselement sich radial bis über die Schaltringaufnahme erstreckt, ist dadurch auch die Schaltringaufnahme direkt an dem Statorträger befestigbar. Vorteilhafterweise können somit die schwingungsbedingten Belastungen, insbesondere in axialer Richtung, an der Schaltringaufnahme vermindert werden, wodurch schwingungsbedingte Beschädigungen verhindert werden.

Dabei kann das Versteifungselement zur Befestigung an dem Statorträger insbesondere mit diesem verschraubt oder vernietet werden, wobei das Versteifungselement insbesondere Öffnungen zur Aufnahme eines entsprechenden Befestigungselements, insbesondere einer Niet und/oder einer Schraube aufweist. Weiterhin kann das Versteifungselement einen sich axial in Richtung des Statorträgers erstreckenden Fortsatz aufweisen, mittels dessen insbesondere eine Klemmverbindung des Versteifungselementes mit dem Statorträger ermöglicht wird.

Gemäß einem weiteren vorteilhaften Ausführungsbeispiel weist das Versteifungselement weiterhin einen im Wesentlichen axial verlaufenden Vorsprung auf, der dazu ausgelegt ist, die Schaltringaufnahme in axialer Richtung teilweise zu überlappen, wodurch eine Befestigung des Versteifungselements an der Schaltringaufnahme ermöglicht wird. Dabei ist insbesondere vorgesehen, den axial verlaufenden Vorsprung derart auszugestalten, dass eine form- oder kraftschlüssige Verbindung zwischen dem Versteifungselement und der Schaltringaufnahme möglich ist.

Gemäß einem besonders bevorzugten Ausführungsbeispiel sind dabei das Versteifungselement und die Schaltringaufnahme derart ausgestaltet, dass eine Schnappverbindung zwischen Versteifungselement und Schaltringaufnahme möglich ist. Dazu können entweder die Schaltringaufnahme oder das Versteifungselement Nasen aufweisen, die in entsprechend angeordnete Aussparungen in dem Versteifungselement bzw. der Schaltringaufnahme einschnappen können.

Dabei hat insbesondere eine klammerartige Ausbildung mit zwei axialen Fortsätzen und der Ausbildung mit Schnappvorrichtung den Vorteil, dass das Versteifungselement schnell und einfach an dem Stator und der Schaltringaufnahme befestigt werden kann.

Alternativ ist es selbstverständlich auch möglich, das Versteifungselement mittels Schrauben oder auch mittels Kleben an dem Stator zu befestigen.

Gemäß einem weiteren vorteilhaften Ausführungsbeispiel weist das Versteifungselement neben der mindestens einen Fensteröffnung mindestens einen im Wesentlich radial verlaufenden Verbindungssteg auf, über den insbesondere eine Biegesteifigkeit des Versteifungselements einstellbar ist. Dabei kann die Biegesteifigkeit zum einen über die umfängliche Breite des Verbindungsstegs eingestellt werden, alternativ oder zusätzlich ist es jedoch auch möglich, die Biegesteifigkeit über die Dicke oder die Formgebung des Verbindungsstegs einzustellen.

Gemäß einem weiteren vorteilhaften Ausführungsbeispiel kann der Verbindungssteg zudem dazu ausgelegt sein, als Kühlfluidleitelement zu dienen, wozu insbesondere sich in Richtung Stator erstreckende Flügelelemente an dem Verbindungssteg angeordnet sein können, die ein Kühlfluid in Richtung Stator leiten.

Gemäß einem weiteren vorteilhaften Ausführungsbeispiel erstreckt sich das Versteifungselement einstückig über den Statorumfang. Dadurch wird der Stator in Richtung Gehäuse von dem Versteifungselement abgedeckt. Bei dieser Ausgestaltung ist es insbesondere vorteilhaft ausreichend viele Fensteröffnungen vorzusehen, um eine ausreichende Kühlung des Stators bereitstellen zu können. Dabei ist eine Kühlfluidzirkulation im Stator über einen Dimensionierung der mindestens einen Fensteröffnung bestimmbar.

Je nach Anordnung kann eine derartige Dimensionierung der Fensteröffnung aber auch bei einzelnen über den Umfang des Stators verteilten Versteifungselementen vorteilhaft sein. Die Ausbildung mit einzelnen über den Umfang des Stators verteilten Versteifungselementen hat zudem den Vorteil, dass die Kühlung des Stators nur in sehr begrenzten Bereichen durch die Versteifungselemente beeinträchtigt werden könnte. Dadurch kann sichergestellt werden, dass zum einen eine verbesserte schwingungsresistente Verbindung zwischen den Statorspulen und den Schaltringen bereitgestellt ist und zum anderen eine ausreichende Kühlung des Stators besteht.

Gemäß einem weiteren vorteilhaften Ausführungsbeispiel kann das Versteifungselement radial mindestens eine Freistellung zur Aufnahme eines Leistungsanschlusses für die elektrische Maschine und/oder für mindestens einen Kühlfluidversorgungskanal aufweist. Dies ist sowohl bei einstückigen als auch bei mehreren über den Umfang verteilten Versteifungselementen nützlich, da so die Schaltringaufnahme an beliebigen Stellen am Stator angeordnet werden kann.

Gemäß einem weiteren vorteilhaften Ausführungsbeispiel kann das Versteifungselement auch derart ausgebildet sein, dass es zwei Verbindungstege aufweist, die kammartig die Fensteröffnung umfänglich begrenzen. Diese Verbindungsstege wiederum sind über einen vorzugsweise plattenartigen Bereich miteinander verbunden. Ein derartig ausgebildetes Versteifungselement wird vorzugsweise mit den Verbindungsstegen zwischen einem Statorzahn und der daran angeordneten Spule angeordnet, während sich der vorzugsweise plattenartige Bereich axial innen an der Schaltringaufnahme abstützt. Axial innen bzw. axial außen ist in diesem Zusammenhang insbesondere in Bezug auf den Stator bzw. das Statorblechpaket definiert. In dieser Ausbildung können über das Versteifungselement axiale Toleranzen zwischen einem die Spule umgebenden Isolierkörper und den Statorzähnen ausgeglichen werden, wodurch das axiale Ausschwingen der Schaltringaufnahme zusätzlich reduziert wird.

Gemäß einem weiteren vorteilhaften Ausführungsbeispiel ist der vorzugsweise plattenartige Bereich vorgebogen ausgebildet, wodurch eine axiale Vorspannkraft auf die Schaltringaufnahme ausübbar ist. Dadurch kann eine nach axial außen gerichtete Vorspannung auf die Schaltringaufnahme ausgeübt werden, die wiederum das Schwingen der Schaltringaufnahme reduziert.

Um ein radiales Verschieben des Versteifungselements aufgrund von Vibrationen zu verhindern, kann weiterhin an dem Stator, insbesondere an dem Statorträger, ein Vorsprung ausgebildet oder ein Vorsprungselement angeordnet sein, wobei das Vorsprungselement oder der Vorsprung dazu ausgelegt sind, auf die Verbindungsstege des Versteifungselements einzuwirken und diese gegen den Statorzahn zu drücken.

Um die Anordnung eines Zwischenblechs am Statorzahn zu ermöglichen, kann weiterhin vorgesehen sein, dass ein zwischen Statorzahn und Spulenwicklung angeordneter Isolierkörper mit entsprechenden Freistellungen für das Versteifungselement ausgebildet ist.

Besonders bevorzugt ist ein Ausführungsbeispiel, bei dem mindestens ein Versteifungselement axial außerhalb der Schaltringaufnahme eine Befestigung der Schaltringaufnahme mit dem Statorträger bereitstellt, als auch mindestens ein Versteifungselement axial innen zwischen dem Statorzahn und dem Isolierkörper angeordnet ist, so dass die Schaltringaufnahme zweiseitig axial außen in Richtung Gehäuse und axial innen in Richtung Stator von den erfindungsgemäßen Versteifungselementen gesichert ist.

Weitere Vorteile und vorteilhafte Ausführungsformen sind in den anhängigen Ansprüchen, der Beschreibung und den Zeichnungen definiert.

Im Folgenden soll die Erfindung anhand von in den Zeichnungen dargestellten Ausführungsbeispielen näher beschrieben werden. Dabei sind die Ausführungsbeispiele rein exemplarischer Natur und sollen nicht den Schutzbereich der Anmeldung festlegen. Dieser wird allein durch die anhängigen Ansprüche definiert.

Es zeigen:
- Fig. 1: eine schematische räumliche Schnittdarstellung durch ein erstes Ausführungsbeispiel der elektrischen Maschine;
- Fig. 2: eine schematische Darstellung eines ersten Ausführungsbeispiels des Versteifungselements;

Hieran schließt sich die unveränderte Beschreibung ab Seite 8 der ursprünglichen Anmeldeunterlagen an
- Fig. 3: eine schematische räumliche Aufsicht auf eine elektrische Maschine mit einem Versteifungselement gemäß dem ersten Ausführungsbeispiel;
- Fig. 4: eine schematische räumliche Aufsicht auf eine elektrische Maschine mit einem Versteifungselement gemäß dem zweiten Ausführungsbeispiel;
- Fig. 5: eine schematische Darstellung eines zweiten Ausführungsbeispiels des Versteifungselements;
- Fig. 6: eine schematische räumliche Teilansicht einer elektrischen Maschine mit einem Versteifungselement gemäß dem zweiten Ausführungsbeispiel;
- Fig. 7: eine weitere schematische räumliche Teilansicht einer elektrischen Maschine mit einem Versteifungselement gemäß dem zweiten Ausführungsbeispiel;
- Fig. 8: eine schematische Darstellung eines dritten Ausführungsbeispiels des Versteifungselements und
- Fig. 9: eine schematische Darstellung eines dritten Ausführungsbeispiels der elektrischen Maschine.

Im Folgenden werden gleiche bzw. funktionell gleichwirkende Elemente mit denselben Bezugszeichen gekennzeichnet.

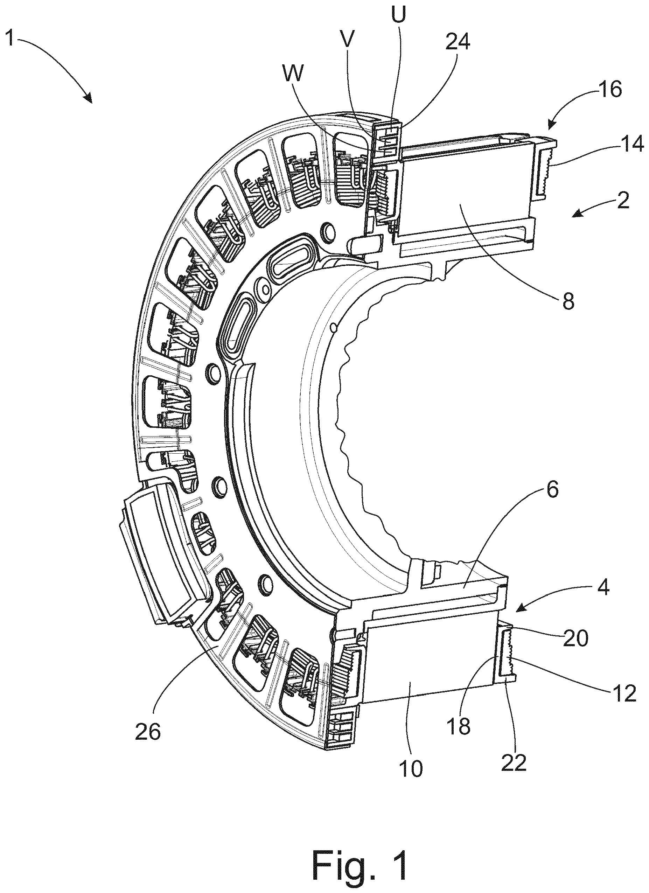

Fig. 1 zeigt eine räumliche Schnittdarstellung einer elektrischen Maschine 1 in Innenläuferbauform mit einem Stator 2, der in bekannter Weise ein Blechpaket 4 tragenden Statorträger 6 aufweist. Das Blechpaket 4 wiederum weist einen Jochbereich 8 und von diesem getragene Zähne 10 auf, wobei die einzelnen Zähne 10 mit Spulen 12 bestückt sind. Weiterhin ist Fig. 1 zu entnehmen, dass zwischen den Zähnen 10 und einer Spulenwicklung 14 jeweils ein Isolierkörper 16 vorgesehen ist. Der Isolierkörper 16 dient dazu, elektrische Kurzschlüsse zwischen der Spulenwicklung 14 und dem Statorblechpaket 4 zu vermeiden. Der Isolierkörper 16 weist einen Wickelbereich 18 und zwei den Wickelbereich 18 begrenzende Schenkel 20, 22 auf. Weiterhin ist Fig. 1 zu entnehmen, dass an dem radial äußeren Schenkel 22 des Isolierkörpers 16 eine Schaltringaufnahme 24 angeordnet ist, in der drei Schaltringe U, V, W für die entsprechende Bestromung des Stators isoliert voneinander aufgenommen sind. Dabei kann die Schaltringaufnahme 24 insbesondere über Schnappverbindungen mit dem Schenkel 22 des Isolierkörpers 16 verbunden sein.

Weiterhin zeigt Fig. 1, dass die Schaltringaufnahme 24 und der Stator 2 axial außen von einem Versteifungselement 26 abgedeckt sind, das sich radial vom Statorträger 6 bis über die Schaltringaufnahme 24 erstreckt.

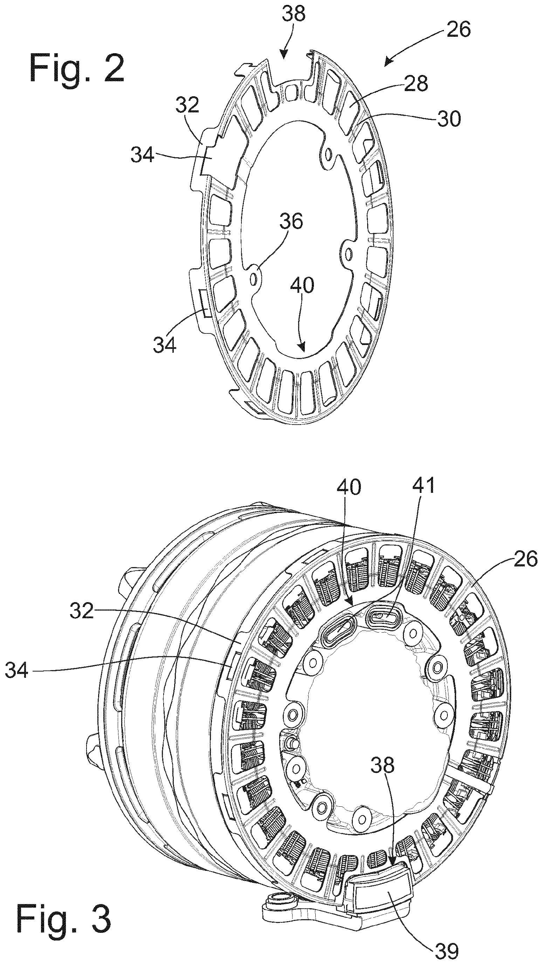

Fig. 2 und auch der in Fig. 3 gezeigte Zusammenbau zeigen eine Darstellung Versteifungselements 26 in einer ersten Ausgestaltung, bei der sich das Versteifungselement 26 einstückig über den gesamten Umfang des Stators 2 erstreckt. Weiterhin ist Fig. 2 besonders gut zu entnehmen, dass das Versteifungselement 26 mehrere Fensteröffnungen 28 aufweist, die für eine Luftzirkulation bzw. eine Kühlfluidzirkulation und somit für eine Kühlung der Spulen sorgen. Die Fensteröffnungen 28 wiederum sind über Verbindungsstege 30 voneinander getrennt, wobei über eine Breite bzw. Dicke der Verbindungsstege 30 eine Biegefestigkeit des Versteifungselements 26 einstellbar ist. Weiterhin zeigt Fig. 2, dass das Versteifungselement 26 radial außen axiale Fortsätze 32 aufweist, die Aussparungen 34 zeigen, mit denen das Versteifungselement 26, wie in Fig. 3 dargestellt, an die Schaltringaufnahme 24 eingeschnappt werden kann.

Radial innen zeigt das in Fig. 2 und 3 dargestellte Versteifungselement 26 Laschen 36, mit denen das Versteifungselement 26 an dem Statorträger 6 beispielsweise mittels Schrauben oder Nieten befestigbar ist. Ebenfalls Fig. 2 und auch Fig. 3 zu entnehmen ist, dass das Versteifungselement 26 Freistellungen 38, 40 aufweisen kann, die dazu ausgelegt sind, einen Leistungsanschluss 39 und/oder Kühlkanäle 41 aufzunehmen.

Da, wie den Fig. 1 und 3 zu entnehmen ist, das Versteifungselement 26 die Schaltringaufnahme 24 mit dem Statorträger 6 und damit einem stationären Bauteil der elektrischen Maschine 1 verbindet, können Belastungen, die aufgrund von Schwingungen im Antriebsstrang zu einer axialen und umfänglichen Bewegung der Schaltringaufnahme 24 führen könnten, verringert werden, so dass eine Drahtverbindung zwischen den Spulen 12 und den Schaltringen U, V, W nicht beschädigt wird. Dadurch, dass die Schaltringaufnahme 24 durch das Versteifungselement 26 auch in axialer Richtung verschlossen wird, kann zudem auch das umfangsseitige Verbiegen der Schaltringaufnahme 24 verringert werden, was ebenfalls die Gefahr einer Zerstörung der Kontaktstellen zwischen Spulen 12 und Schaltringen U, V, W reduziert.

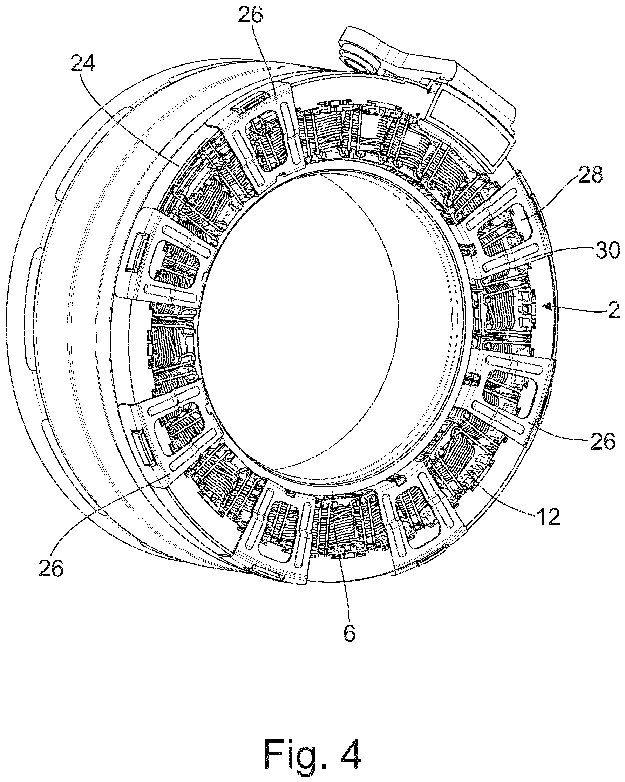

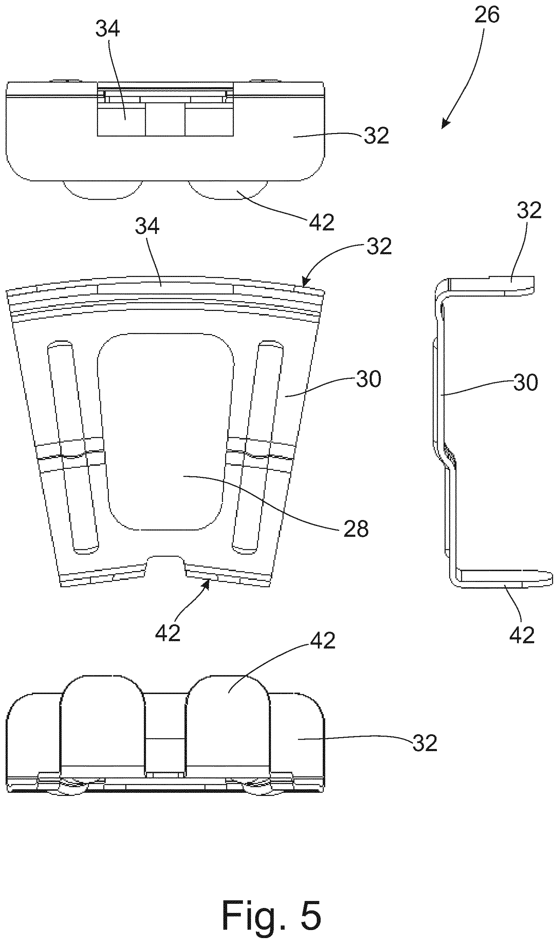

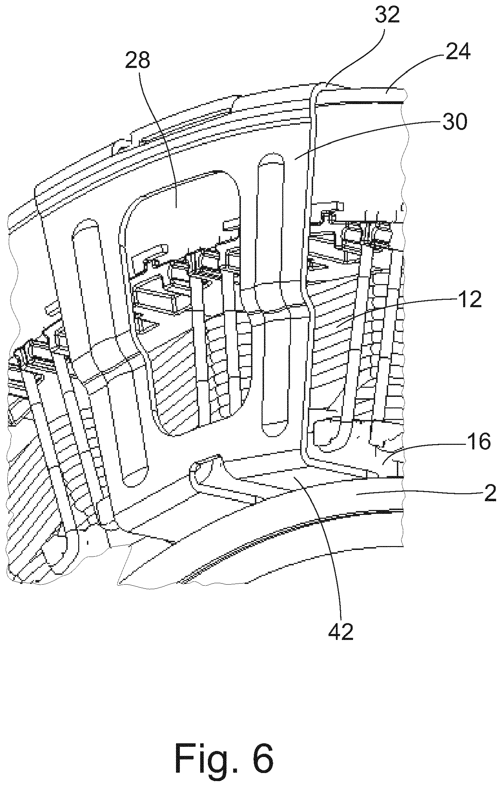

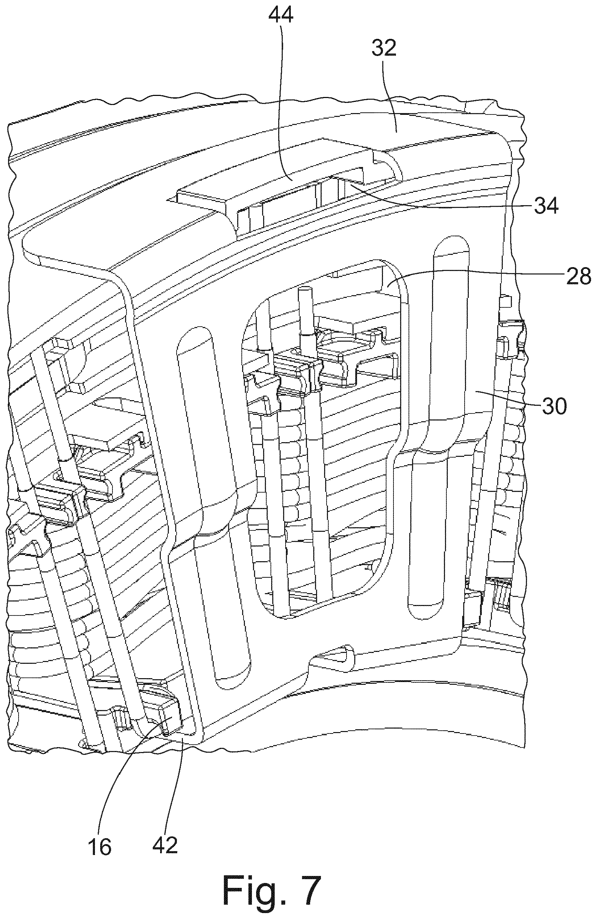

Statt eines einstückigen, sich über den gesamten Umfang des Stators 2 erstreckenden Versteifungselements 26 kann das Versteifungselement auch, wie Fig. 4 zeigt, in Form einer oder mehrerer Klammern, die über den Umfang des Stators 2 verteilt sind, ausgebildet sein. Dabei weist das derart ausgebildete Versteifungselement 26, wie den Fig. 4 bis 7 zu entnehmen ist, ebenfalls eine Fensteröffnung 28 und Verbindungsstege 30 auf. Weiterhin ist insbesondere den verschiedenen Ansichten von Fig. 5 auf das Versteifungselement zu entnehmen, dass das Versteifungselement klammerartig ausgestaltet ist und nicht nur an seiner radial äußeren Seite einen axialen Fortsatz 32, sondern auch an seiner radial inneren Seite einen axialen Fortsatz 42 aufweist. Wie insbesondere der Zusammenbaudetailansichten der Fig. 6 und Fig. 7 zu entnehmen, ist dabei der radial innere Fortsatz 42 dazu ausgelegt, fest mit dem Stator 2 bzw. einem der Statorelemente, wie beispielsweise dem Isolierkörper 16, insbesondere über Klemmen verbunden zu werden. Statt an dem Statorträger 6 kann sich der axiale Fortsatz 42 auch, wie insbesondere Fig. 6 und 7 zeigen, an dem radialen inneren Schenkel 20 des Isolierkörpers 16 festklemmen.

Der radial äußere Fortsatz 32 dagegen schnappt in vorbeschriebener Manier an dem Schaltring 24 ein. Dazu sind vorzugsweise Nasen 44 an der Schaltringaufnahme 24 ausgebildet, die mit der Öffnung 34 am Versteifungselement 24 zusammenwirken. Diese Schnappverbindung ist insbesondere in Fig. 7 dargestellt.

Über die axialen Fortsätze 32, 42 wird sichergestellt, dass die Schaltringaufnahme 24 an einem feststehenden Element des Stators 2 befestigt werden kann, so dass axiale Bewegungen, die zu einer Beschädigung führen könnten, wiederum eingeschränkt sind. Über die umfängliche Verteilung der Versteifungselemente 26, wie in Fig. 4 dargestellt, wird auch das umfängliche Verbiegen der Schaltringaufnahme 24 eingeschränkt, so dass es auch darüber nicht zu einer Beschädigung der elektrischen Verbindungen zwischen Schaltringen U, V, W und den Statorspulen 12 kommen kann.

Die in den Fig. 4 bis 7 dargestellte Lösung hat zudem den Vorteil, dass eine Kühlung des Stators nicht beeinträchtigt wird, da der Stator 2 nur teilweise von den Versteifungselementen 26 abgedeckt ist.

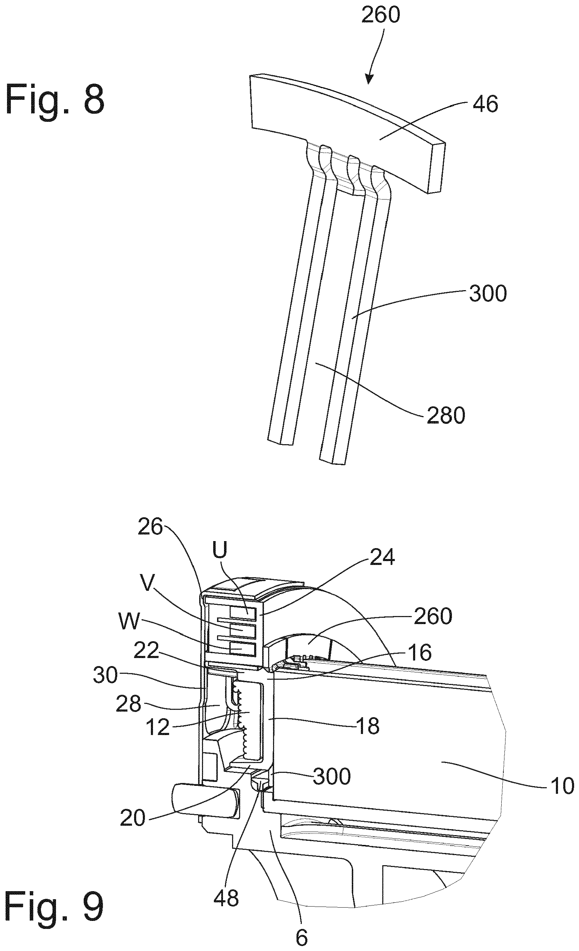

Alternativ oder zusätzlich kann ein Versteifungselement 260 in einer in den Fig. 8 und 9 dargestellten dritten Ausgestaltung auch die Schaltringaufnahme 24 radial innen, also in Richtung Stator, axial sichern. Dazu weist das Versteifungselement 260, wie Fig. 8 zu entnehmen ist, einen plattenartigen Bereich 46 auf, von dem sich die Verbindungsstege 300 kammartig um die Fensteröffnung 280 herum erstrecken.

Dieses Versteifungselement 260 wird, wie Fig. 9 zu entnehmen ist, nicht axial außen an der Schaltringaufnahme 24 angeordnet, sondern zwischen den Statorzahn 10 und den Isolierkörper 16 gesteckt. Dazu kann der Isolierkörper 16 entsprechende Aussparungen aufweisen. Über dieses Versteifungselement 260 kann wiederum eine axiale Bauraumausgleichung zwischen der Schaltringaufnahme 24 und den Statorzähnen bzw. dem Isolierkörper 16 geschaffen werden. Weiterhin ist Fig. 9 zu entnehmen, dass der plattenartige Bereich 46 des Versteifungselements 260 sich an die Schaltringaufnahme 24 anlagert und diese axial innen abstützt. Um eine besonders gute axiale Abstützung zu erreichen, kann der plattenartige Bereich 46 des Versteifungselements 260 auch vorgebogen ausgebildet sein, so dass das Versteifungselement 260 bei Montage eine axiale Vorspannkraft auf die Schaltringaufnahme 24 ausübt.

Um das Versteifungselement 260 radial zu sichern, kann weiterhin, wie Fig. 9 zeigt, radial innen am Statorträger 6 ein Sicherungselement 48, insbesondere ein Schneidring, vorgesehen sein, der auf die radial inneren Bereiche der Verbindungsstege 300 einwirkt und diese gegen die Statorzähne 10 presst.

Weiterhin ist Fig. 9 zu entnehmen, dass axial außen am Stator 2 ein Versteifungselement 26 vorgesehen werden kann, das entsprechend dem ersten oder zweiten oben beschriebenen Ausführungsbeispiel ausgebildet sein kann und die Schaltringaufnahme 24 axial außen mit dem Statorträger 6 verbindet. Dadurch kann eine besonders gute Schwingungssicherung bereitgestellt werden, so dass einer Beschädigung der elektrischen Verbindungen zwischen den Statorspulen 12 und den Schaltringen U, V, W entgegengewirkt werden kann.

Insgesamt ermöglichen die Versteifungselemente 26; 260, dass der Schwingungseintrag, der von einer Verbrennungsmaschine erzeugten Schwingungen auf eine elektrisehe Maschine, nicht zu einer Zerstörung der elektrischen Verbindungen zwischen Statorspulen und Schaltringen führen muss. Dabei ist das Versteifungselement 26; 260 einfach und ohne die baulichen Gegebenheiten der elektrischen Maschine verändern zu müssen, einfach anzubringen und beeinträchtigt aufgrund der Fensteröffnungen 28; 280 auch nicht die nötige Kühlung des Stators.

### Bezugszeichen

- 1: elektrische Maschine
- 2: Stator
- 4: Blechpaket
- 6: Statorträger
- 8: Joch
- 10: Zahn
- 12: Spule
- 14: Spulenwicklung
- 16: Isolierkörper
- 18: Wickelbereich des Isolierkörpers
- 20, 22: Schenkel des Isolierkörpers
- 24: Schaltringaufnahme
- 26; 260: Versteifungselement
- 28; 280: Fensteröffnung
- 30; 300: Verbindungssteg
- 32: axialer Fortsatz
- 34: Schnappaufnahme
- 36: Befestigungslasche
- 38, 40: Freistellungen
- 39: Leistungsanschluss
- 41: Kühlmittelkanäle
- 42: radial innerer axialer Fortsatz des Versteifungselements
- 44: Schnappnasen
- 46: Plattenbereich
- 48: Schneidring

## Patentansprüche

1. Elektrische Maschine (1), insbesondere für ein Hybridmodul eines Hybridfahrzeugs oder für ein Elektrofahrzeug, mit
- einem Stator (2) und einem Rotor, wobei
- der Stator (2) einen Statorträger (6) und ein Blechpaket (4) umfasst und wobei
- das Blechpaket (4) Statorzähne (10) aufweist, an denen mittels Isolierkörpern (16) Statorspulen (12) angeordnet sind, wobei
- radial neben dem Stator (2) eine Schaltringaufnahme (24) angeordnet ist, die dazu ausgelegt ist, über in der Schaltringaufnahme (24) aufnehmbare Schaltringe (U; V; W) die Statorspulen (12) zu bestromen und wobei
- an dem Stator (2) mindestens ein Versteifungselement (26) vorgesehen ist, welches axial außen am Stator (2) angeordnet ist und sich zumindest teilweise radial entlang mindestens einer der Statorspulen (12) und radial bis über die Schaltringaufnahme (24) erstreckt, wobei
- die Statorspulen (12) radial zwischen der Schaltringaufnahme (24) und dem Statorträger (6) angeordnet sind, wobei
- die Schaltringaufnahme (24) als ein separates Element vorliegt und an den Isolierkörpern (16) befestigt ist, wobei
- das Versteifungselement (26) radial einerseits an der Schaltringaufnahme (24) und andererseits an dem Statorträger (6) oder an einem Isolierkörper (16) befestigt ist, und wobei
- das Versteifungselement (26) in dem radialen Erstreckungsbereich mindestens eine Fensteröffnung (28) aufweist.

2. Elektrische Maschine (1) nach Anspruch 1, wobei das Versteifungselement (26) über eine Schnappverbindung und/oder einen Formschluss mit der Schaltringaufnahme (24) verbunden ist, wobei die Verbindung über einen sich axial erstreckenden Fortsatz (32) des Versteifungselements (26) herstellbar ist.

3. Elektrische Maschine (1) nach Anspruch 1 oder 2, wobei sich das Versteifungselement (26) einstückig über den Statorumfang erstreckt.

## Claims

1. Electrical machine (1), in particular for a hybrid module of a hybrid vehicle or for an electric vehicle, comprising
- a stator (2) and a rotor, wherein
- the stator (2) comprises a stator carrier (6) and a laminated core (4), and wherein
- the laminated core (4) has stator teeth (10) on which stator coils (12) are arranged by means of insulating bodies (16), wherein
- a switching ring receptacle (24) is arranged radially next to the stator (2) and is designed to energize the stator coils (12) by means of switching rings (U; V; W) which can be received in the switching ring receptacle (24), and wherein
- at least one reinforcing element (26) is provided on the stator (2) and is arranged axially on the outside of the stator (2) and extends at least partially radially along at least one of the stator coils (12) and radially as far as beyond the switching ring receptacle (24),
wherein
- the stator coils (12) are arranged radially between the switching ring receptacle (24) and the stator carrier (6), wherein
- the switching ring receptacle (24) is present as a separate element and is fastened to the insulating bodies (16), wherein
- the reinforcing element (26) is fastened radially on one side to the switching receptacle (24) and on the other side to the stator carrier (6) or to an insulating body (16), and wherein
- the reinforcing element (26) has at least one window opening (28) in the radial region of extent.

2. Electrical machine (1) according to Claim 1, wherein the reinforcing element (26) is connected to the switching ring receptacle (24) by means of a snap-action connection and/or an interlocking connection, wherein the connection can be established by means of an axially extending projection (32) of the reinforcing element (26).

3. Electrical machine (1) according to Claim 1 or 2, wherein the reinforcing element (26) extends in one piece over the stator circumference.

## Revendications

1. Machine électrique (1), destinée notamment à un module hybride d'un véhicule hybride ou d'un véhicule électrique, ladite machine électrique comprenant
- un stator (2) et un rotor,
- le stator (2) comprenant un support de stator (6) et un noyau feuilleté (4) et
- le noyau feuilleté (4) comportant des dents de stator (10) sur lesquelles des bobines de stator (12) sont disposées au moyen de corps isolants (16),
- un logement de bague de commutation (24) étant disposé radialement à côté du stator (2) et étant conçu pour alimenter les bobines de stator {12) par le biais de bagues de commutation (U ; V ; W) qui peuvent être logées dans le logement de bague de commutation (24) et
- au moins un élément raidisseur (26) étant prévu au niveau du stator (2) et étant disposé axialement à l'extérieur du stator (2) et s'étendant au moins en partie radialement le long d'au moins une des bobines de stator (12) et radialement au-delà du logement de bague de commutation (24),
- les bobines de stator (12) étant disposées radialement entre le logement de bague de commutation (24) et le support de stator (6),
- le logement de bague de commutation (24) étant présent en tant qu'élément séparé et étant fixé aux corps isolants (16),
- l'élément raidisseur (26) étant fixé radialement d'une part au logement de bague de commutation (24) et d'autre part au support de stator (6) ou à un corps isolant (16), et
- l'élément raidisseur (26) comportant au moins une ouverture de fenêtre (28) dans la région d'extension radiale.

2. Machine électrique (1) selon la revendication 1, l'élément raidisseur (26) étant relié par une liaison à encliquetage et/ou à complémentarité de formes au logement de bague de commutation (24), la liaison pouvant être réalisée par une extension axiale (32) de l'élément raidisseur (26).

3. Machine électrique (1) selon la revendication 1 ou 2, l'élément raidisseur (26) s'étendant d'une seule pièce sur la circonférence du stator.
